Europäisches Patentamt

European Patent Office

Office européen des brevets

(19)

(11) Veröffentlichungsnummer: **0 014 376**
**A1**

(12) **EUROPÄISCHE PATENTANMELDUNG**

(21) Anmeldenummer: **80100319.5**

(22) Anmeldetag: **22.01.80**

(51) Int. Cl.³: **A 01 D 78/12**

(30) Priorität: **02.02.79 AT 778/79**

(43) Veröffentlichungstag der Anmeldung:
**20.08.80 Patentblatt 80/17**

(84) Benannte Vertragsstaaten:
**CH DE FR GB IT NL**

(71) Anmelder: **Alois Pöttinger OHG**

**A-4710 Grieskirchen(AT)**

(72) Erfinder: **Popofsits, Franz**
**Neudauer Landstrasse 93**
**A-7533 Ollersdorf(AT)**

(74) Vertreter: **Patentanwälte Dipl.-Ing. A. Grünecker,
Dr.-Ing. H. Kinkeldey, Dr.-Ing. W. Stockmair,
Dr. rer. nat. K. Schumann, Dipl.-Ing. P.H. Jakob, Dr. rer.
nat. G. Bezold Maximilianstrasse 43
D-8000 München 22(DE)**

(54) **Gras- bzw. Heubearbeitungsmaschine.**

(57) Gras- bzw. Heubearbeitungsmaschine mit mindestens einem un eine aufrechte Achse drehbaren Rechrad (3), an dem mehrere, vom Bereich der Drehachse nach außen gerichtete, um ihre Längsachse drehbare Tragarme (8) gelagert sind, an deren inneren Enden jeweils ein durch eine Kurvenbahn gesteuerter Schwenkhebel (13) angebracht ist, während am äußeren Ende jedes Tragarms ein Zinkenträger (5) angebracht ist, wobei jedem Tragarm (8) benachbart ein weiterer Tragarm (18) zugeordnet ist und jeder Zinkenträger (5) wahlweise an einem der benachbarten Tragarme (18) anbringbar ist, welche Maschine einfach und sehr rasch aus einer Schwadmaschine in eine Zettmaschine und umgekehrt umgerüstet werden kann, indem jeder benachbarte Tragarm (18) am Rechrad um seine Längsachse drehbar gelagert und mit dem zugeordneten Tragarm (8) durch ein Getriebe (19) zur gegenläufigen Drehung gekuppelt ist.

Fig. 1

Croydon Printing Company Ltd.

./...

Fig. 4

0014376

PATENTANWÄLTE

REPRESENTATIVES BEFORE THE
EUROPEAN PATENT OFFICE

A. GRÜNECKER
DIPL.-ING

H. KINKELDEY
DR.-ING

W. STOCKMAIR
DR.-ING · AeE (CALTECH)

K. SCHUMANN
DR RER NAT · DIPL.-PHYS

P. H. JAKOB
DIPL.-ING

G. BEZOLD
DR RER NAT.- DIPL-CHEM.

8 MÜNCHEN 22
MAXIMILIANSTRASSE 43

EP 145

Alois Pöttinger OHG
A-4710 Grieskirchen, Österreich

## Gras- bzw. Heubearbeitungsmaschine

## Beschreibung

Die Erfindung bezieht sich auf eine Gras- bzw. Heubearbeitungsmaschine mit mindestens einem um eine aufrechte Achse drehbaren Rechrad, an dem mehrere, vom Bereich der Drehachse nach außen gerichtete, um ihre Längsachse drehbare Tragarme gelagert sind, an deren inneren Enden jeweils ein durch eine Kurvenbahn gesteuerter Schwenkhebel angebracht ist, während am äußeren Ende jedes Tragarmes ein Zinkenträger angebracht ist, wobei jedem Tragarm benachbart ein weiterer Tragarm zugeordnet ist und jeder Zinkenträger wahlweise an einem der benachbarten Tragarme anbringbar ist.

2

Gras- bzw. Heubearbeitungsmaschinen werden zum Rechen des abgeschnittenen Gutes verwendet. Dabei ist es einerseits erforderlich, das Gut in einem Schwad abzulegen, andererseits zum rascheren Trocknen auseinanderzubreiten, d.h. zu zetten. Um diese beiden unterschiedlichen Arbeitsweisen durchführen zu können, sind bei einer Heubearbeitungsmaschine der eingangs geschilderten Art die benachbarten Tragarme starr am Rechrad radial nach außen ragend angebracht. Wenn bei dieser Maschine die Zinkenträger auf den sich um ihre Längsachse drehenden Tragarmen angebracht sind, dient die Maschine zum Schwaden. Soll mit dieser Maschine das Heu auseinandergebreitet werden, so werden die Zinkenträger auf die benachbarten, starr angeordneten Tragarme so gesteckt, daß die Zinken senkrecht nach unten weisen. Damit ein Arbeiten mit dieser so umgerüsteten Maschine möglich ist, muß aber die gesamte Maschine nach vorne geneigt und in der Höhe so eingestellt werden, daß die Spitzen der nach unten weisenden Zinken das Heu erfassen, ohne in den Boden einzudringen. Das Kippen der Maschine und die genaue Einstellung der Zinken ist aber umständlich und zeitraubend.

Der Erfindung liegt die Aufgabe zugrunde, eine Gras- bzw. Heubearbeitungsmaschine dieser Art so auszugestalten, daß sie einfach und sehr rasch von einer Schwadmaschine in eine Zettmaschine umgerüstet werden kann.

Zur Lösung dieser Aufgabe sieht die Erfindung bei einer Gras- bzw. Heubearbeitungsmaschine der eingangs geschilderten Art vor, daß jeder benachbarte Tragarm am Rechrad um seine Längsachse drehbar gelagert und mit dem zugeordneten Tragarm durch ein Getriebe zur gegenläufigen Drehung gekuppelt ist. Durch diese Maßnahmen wird erreicht, daß das Umrüsten der Maschine von der einen auf die andere Arbeitsweise nur ein Umstecken der Zinkenträger auf die benachbarten Tragarme erfordert.

So kann eine Gras- bzw. Heubearbeitungsmaschine mit einem einzigen Rechrad ohne Zeitverlust wahlweise für die eine oder andere Arbeitsweise eingesetzt werden. Es ist aber auch möglich, auf diese Art und Weise eine Gras- bzw. Heubearbeitungsmaschine mit zwei Rechrädern auszugestalten, wobei die paarweise arbeitenden Rechräder bei solchen Maschinen zum Schwaden gegenläufig nach innen, zum Zetten gegenläufig nach außen angetrieben werden.

In der nachfolgenden Beschreibung und in den Zeichnungen ist die Erfindung anhand von zwei Ausführungsbeispielen erläutert. Dabei zeigen:

Fig. 1 und 2 schematische Darstellungen der Heu- bzw. Grasbearbeitungsmaschine zum Schwaden bzw. zum Zetten,

Fig. 3 und 4 konstruktive Einzelheiten und

Fig. 5 und 6 zwei weitere Ausführungsformen der Maschine.

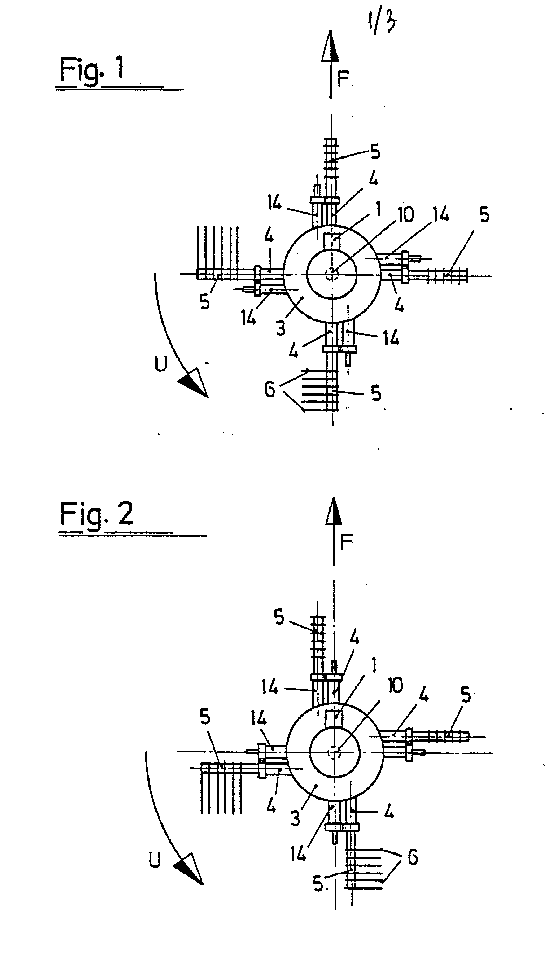

Beim Ausführungsbeispiel gemäß den Fig. 1 bis 4 weist die Heuwerbungsmaschine ein am Maschinenrahmen 1 drehbar gelagertes Rechrad 3 auf, an welchem Hülsen 4 zur Halterung von Zinkenträgern 5 angeordnet sind. In den Hülsen 4 sind Tragarme 8 gelagert. Das Rechrad 3 ist an der aufrechten Drehachse 10 angebracht, welche von einer maschinenfesten Steuerkurve 11 umgeben ist, in der Rollen 12 geführt sind, die an Schwenkhebeln 13 gelagert sind, welche mit den Tragarmen 8 fest verbunden sind. Die Zinkenträger 5, die mit senkrecht davon abragenden Zinken 6 versehen sind, sind mit den Tragarmen 8 abnehmbar verbunden.

Bei Drehung des Rechrades 3 laufen die Rollen 12 in der Steuerkurve 11, wodurch entsprechend dem Verlauf der Steuerkurve 11 die Schwenkhebel 13 verschwenkt und die Tragarme 8 entsprechend gedreht werden, so daß die Zinken 6 hin- und hergehende Schwenkbewegungen vollführen. Bei der Drehrichtung des Rechrades nachlaufenden Schwenkbewegungen der Zinken 6 ist die Maschine als Schwadmaschine einsetzbar.

Um die Maschine auch als Zettmaschine verwenden zu können, wird die Möglichkeit geschaffen, die Zinken 6 gegenüber der Drehung des Rechrades 3 vorlaufend schwenken zu können. Hierfür sind im Rechrad 3 parallel zu den Hülsen 4 weitere Hülsen 14 vorgesehen, in welchen Tragarme 18 gelagert sind. Außerdem sind auf die Tragarme 8 und 18 Zahnräder 9 und 19 aufgekeilt, die miteinander kämmen. Die Zinkenträger 5 können entweder auf die Tragarme 8 oder auf die Tragarme 18 aufgesteckt und auf diesen, z.B. mittels Splinten, Vorsteckern, Absteckbolzen od.dgl. befestigt werden.

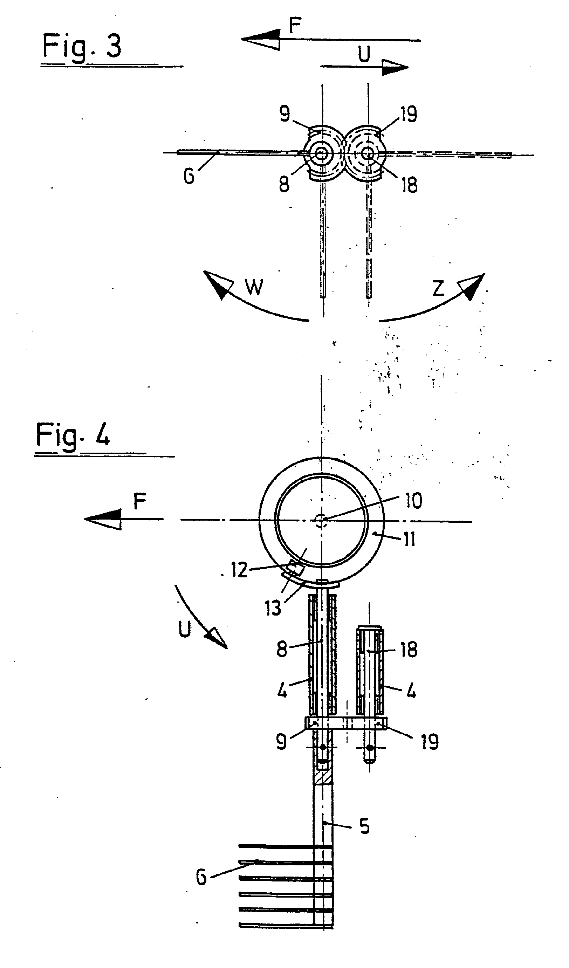

Da über die Zahnräder 9,19 die Tragarme 18 gegenüber den Tragarmen 8 mit umgekehrtem Sinn gedreht werden, vollführen die Zinken 6 bei auf die Tragarme aufgesteckten Zinkenträgern 5 eine gegenüber der anderen Stecklage gegenläufige Schwenkbewegung. Wenn die Maschine in Fahrtrichtung F bewegt wird und das Rechrad in der Richtung U gedreht wird, schwenken die Zinken 6 in der einen Lage der Zinkenträger 5 gegenüber der Drehrichtung des Rechrades 3 nach hinten aus (Drehsinn w in Fig. 3), wogegen sie in der anderen Lage der Zinkenträger 5 nach vorne ausschwenken (Drehsinn z in Fig. 3).

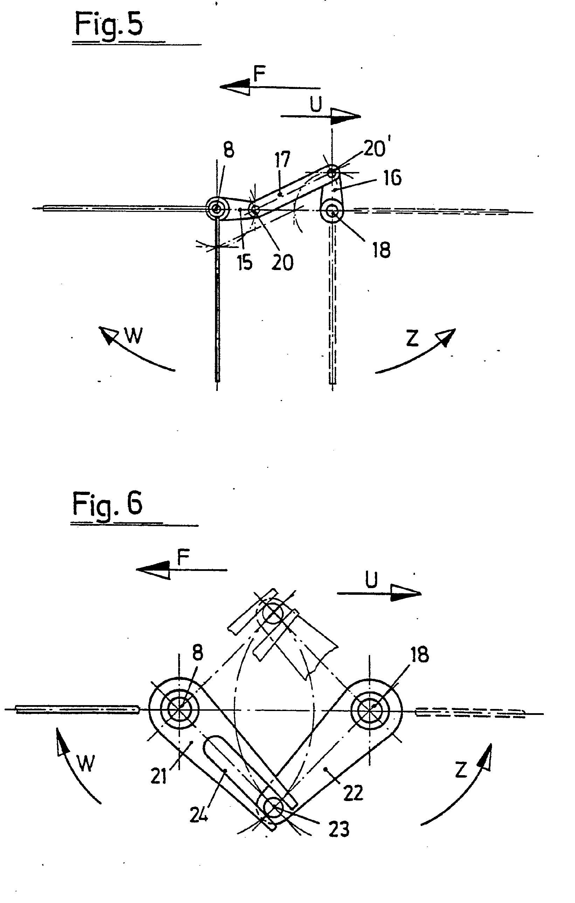

Gemäß dem Ausführungsbeispiel nach Fig. 5 erfolgt die Drehkupplung der beiden Tragarme 8 und 18 nicht durch Zahnräder oder Zahnsegmente, sondern durch eine Schwinge 17, die mit an den Tragarmen 8 und 18 fest angebrachten

5

Kurbeln 15 und 16, die senkrecht zueinander stehen, durch Gelenkbolzen 20,20' verbunden ist.

Beim Ausführungsbeispiel nach Fig. 6 erfolgt die Drehkupplung der beiden Tragarme 8 und 18 durch zwei mit diesen fest verbundenen Kurbeln 21 und 22, von denen die Kurbel 22 einen Führungszapfen 23 trägt, der in einem Schlitz 24 der anderen Kurbel 21 gleitet.

Die Schwenkbewegung der Zinken 6 ist durch die Steuerkurve 11 festgelegt. Um die Bewegungsphasen der Zinken 6, z.B. gegenüber der Fahrtrichtung einstellen zu können, d.h. bestimmen zu können, wann sich die Zinken 6, z.B. bezogen auf die Fahrtrichtung in der angenähert Senkrechten und wann in einer vom Boden abgehobenen Lage befinden, kann die Steuerkurve gegenüber dem Fahrgestell verdrehbar sein.

0014376

PATENTANWÄLTE

REPRESENTATIVES BEFORE THE
EUROPEAN PATENT OFFICE

A. GRÜNECKER
DIPL.-ING

H. KINKELDEY
DR.-ING

W. STOCKMAIR
DR.-ING · AeE ICALTECH

K. SCHUMANN
DR RER NAT · DIPL.-PHYS

P. H. JAKOB
DIPL.-ING

G. BEZOLD
DR RER NAT · DIPL.-CHEM

8 MÜNCHEN 22
MAXIMILIANSTRASSE 43

EP 145

Alois Pöttinger OHG
A-4710 Grieskirchen, Österreich

Patentansprüche

1. Gras- bzw. Heubearbeitungsmaschine mit mindestens einem um eine aufrechte Achse drehbaren Rechrad, an dem mehrere, vom Bereich der Drehachse nach außen gerichtete, um ihre Längsachse drehbare Tragarme gelagert sind, an deren inneren Enden jeweils ein durch eine Kurvenbahn gesteuerter Schwenkhebel angebracht ist, während am äußeren Ende jedes Tragarms ein Zinkenträger angebracht ist, wobei jedem Tragarm benachbart ein weiterer Tragarm zugeordnet ist und jeder Zinkenträger wahlweise an einem der benachbarten Tragarme anbringbar ist, d a d u r c h g e -

2

0014376

kennzeichnet, daß jeder benachbarte Tragarm (18) am Rechrad (3) um seine Längsachse drehbar gelagert und mit dem zugeordneten Tragarm (8) durch ein Getriebe (9,19 bzw. 15,16,17 bzw. 21,22) zur gegenläufigen Drehung gekuppelt ist.

2. Gras- bzw. Heubearbeitungsmaschine nach Anspruch 1, dadurch gekennzeichnet, daß die benachbarten Tragarme (8,18) zueinander parallel angeordnet sind.

3. Gras- bzw. Heubearbeitungsmaschine nach Anspruch 1 oder 2, dadurch gekennzeichnet, daß auf den benachbarten Tragarmen (8,18) miteinander kämmende Zahnräder (9,19) oder Zahnsegmente angeordnet sind.

4. Gras- bzw. Heubearbeitungsmaschine nach Anspruch 1 oder 2, dadurch gekennzeichnet, daß die benachbarten Tragarme (8,18) mittels zweier senkrecht aufeinanderstehender Kurbeln (15,16) und einer diese gelenkig verbindenden Schwinge (17) auf Mitnahme gekuppelt sind.

5. Gras- bzw. Heubearbeitungsmaschine nach Anspruch 1 oder 2, dadurch gekennzeichnet, daß die benachbarten Tragarme (8,18) mittels an ihnen befestigter Kurbeln (21,22) auf Mitnahme gekuppelt sind, indem am Ende einer der Kurbeln ein in einen Schlitz der anderen Kurbel gleitender Zapfen (23) geführt ist.

0014376

Fig. 1

Fig. 2

Fig. 3

F

U

9        19

6        8    18

W        Z

Fig. 4

F

10

11

12

13

U

8        18

4        4

9        19

5

6

Fig.5

Fig.6

## EUROPÄISCHER RECHERCHENBERICHT

Europäisches
Patentamt

EP 80 10 0319

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| A | DE – B – 1 299 159 (W. STOLL)<br><br>* Spalten 1 und 2 *<br><br>-- | | A 01 D 78/12 |
| A | DE – B – 1 913 197 (W. STOLL MASCHINEN-FABRIK)<br><br>* Spalten 1 und 2 *<br><br>-- | | |
| A | DE – A1 – 2 444 667 (MASCHINENFABRIK FAHR AG)<br><br>* Seiten 1 bis 5 *<br><br>-- | | **RECHERCHIERTE SACHGEBIETE (Int. Cl.3)** |
| A | DE – A1 – 2 636 081 (W. STOLL MASCHI-NENFABRIK)<br><br>* Seiten 4 bis 7 *<br><br>-- | | A 01 D 78/00<br><br>A 01 D 80/00 |
| A | DE – A1 – 2 702 743 (KUHN S.A.)<br><br>* Seiten 8 bis 14 *<br><br>----- | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 30-04-1980 | SCHOFER |